# EUROPEAN PATENT APPLICATION

(11) **EP 4 549 856 A1**
(43) Date of publication of application: **07.05.2025**
(21) Application number: 23855001.6
(22) Date of filing: 15.06.2023
(51) Int. Cl.: F25D 23/06, F16B 12/20

(54) **REFRIGERATOR**

(30) Priority: 17.08.2022 KR 20220102992
(71) Applicant: Samsung Electronics Co., Ltd., Suwon-si, Gyeonggi-do 16677 (KR)
(72) Inventor: KIM, Byungsu, Suwon-si Gyeonggi-do 16677 (KR); HAN, Jongwoo, Suwon-si Gyeonggi-do 16677 (KR)
(74) Representative: Walaski, Jan Filip
(86) International application number: PCT/KR2023/008251
(87) International publication number: WO 2024/039030

(57) **Abstract**

Disclosed herein is a refrigerator. A refrigerator according to an embodiment of the disclosure includes an inner case forming a storage compartment therein, an outer case coupled to an outer side of the inner case to form an exterior, a partition arranged on an inner side of the inner case and dividing the storage compartment, and a fixer configured to penetrate the inner case and enabled to be coupled with the partition to allow the partition to be attached to the inner case.

## Description

### [Technical Field]

The disclosure relates to a refrigerator, and more particularly, to a refrigerator including a partition that divides a storage compartment.

### [Background Art]

In general, a refrigerator, which is an appliance for keeping food fresh, includes a main body having a storage compartment and a cold air supply device for supplying cold air to the storage compartment. The storage compartment includes a refrigerating compartment in which the food is kept refrigerated at a temperature of about 0°C to 5°C, and a freezing compartment in which the food is kept frozen at a temperature of about 0°C to -30°C. The storage compartment typically has an open front for placing and removing food, and the open front of the storage compartment is opened and closed by a door.

The refrigerator uses a compressor, a condenser, an expander, and an evaporator to repeat a cooling cycle in which the refrigerant is compressed, condensed, expanded, and evaporated. Both the freezing and refrigerating compartments may be cooled by a single evaporator installed on the freezing compartment side, or the freezing and refrigerating compartments may each have an evaporator and be cooled independently.

### [Disclosure]

### [Technical Problem]

An aspect of the present disclosure provides a refrigerator having an improved structure in which a partition dividing a storage compartment is secured to an inner case.

Further, an aspect of the present disclosure provides a refrigerator having an improved structure in which a partition dividing a storage compartment is in close contact with an inner case.

Technical tasks to be achieved in this document are not limited to the technical tasks mentioned above, and other technical tasks not mentioned will be clearly understood by those skilled in the art from the description below.

### [Technical Solution]

According to an embodiment of the present disclosure, a refrigerator includes an inner case forming a storage compartment therein, an outer case coupled to an outer side of the inner case to form an exterior, a partition arranged on an inner side of the inner case and dividing the storage compartment, and a fixer configured to penetrate the inner case and couplable with the partition to allow the partition to be attached to the inner case.

The fixer may include a fixer coupling portion arranged on the inner side of the inner case to coupled with the partition, and a fixer outer holding portion connected to the fixer coupling portion and arranged on the outer side of the inner case.

The fixer outer holding portion may be configured to contact an outer wall of the inner case facing the outer side of the inner case.

The fixer outer holding portion may include a plate, and one surface of the plate may be configured to contact the outer wall of the inner case.

The one surface of the plate may include a curved surface.

The fixer may further include a fixer inner holding portion arranged on the inner side of the inner case so as to contact an inner wall of the inner case facing the inner side of the inner case.

The fixer inner holding portion may extend from the fixer coupling portion.

The fixer inner holding portion may include a hook, and one end of the hook may be configured to contact the inner wall of the inner case.

The inner case may include a through-hole through which the fixer can penetrate, and the one end of the hook may include a bent member corresponding to a bent wall extending from the inner wall of the inner case to the through-hole.

The partition may include a coupling protrusion, and the fixer coupling portion may include a fixer coupling groove into which the coupling protrusion is inserted.

The partition may further include a coupling hook protruding toward the inner case, and the coupling protrusion may be formed to protrude from the coupling hook.

The coupling protrusion may be formed to protrude in a direction orthogonal to a direction in which the coupling hook protrudes.

The partition may include a side surface in contact with the inner case, the side surface including a first side surface and a second side surface positioned opposite the first side surface, and the coupling protrusion may include a first coupling protrusion arranged on the first side surface and a second coupling protrusion arranged on the second side surface.

The inner case may include a first side wall facing the first side surface of the partition and a second side wall facing the second side surface of the partition, and the fixer may include a first fixer arranged to penetrate the first side wall and a second fixer arranged to penetrate the second side wall.

The fixer coupling portion and the fixer outer holding portion may be formed integrally.

According to an embodiment of the present disclosure, a refrigerator includes a refrigerator includes an outer case forming an exterior thereof, an inner case including an outer wall facing the outer case and an inner wall positioned opposite the outer wall and forming a storage compartment, a partition partitioning the storage compartment, the partition including a side surface arranged to face the inner wall of the inner case, a fixer configured to penetrate the inner case, the fixer including a fixer outer holding portion supported on the outer wall of the inner case and a fixer coupling portion protruding from the fixer outer holding portion towards the inner wall of the inner case and enabled to be coupled with the side surface of the partition.

The fixer may further include a fixer inner holding portion supported on the inner wall of the inner case, and the fixer inner holding portion may extend from the fixer coupling portion.

The fixer inner holding portion may include a hook, and one end of the hook may be configured to contact the inner wall of the inner case.

The fixer outer holding portion may include a plate, and one surface of the plate may be configured to contact the outer wall of the inner case.

The partition may include a coupling protrusion arranged on the side surface, and the fixer coupling portion may include a fixer coupling groove into which the coupling protrusion is inserted.

### [Advantageous effects]

According to the spirit of the present disclosure, the refrigerator may include the fixer to secure the partition to the inner case.

Further, according to the spirit of the present disclosure, the refrigerator may include the fixer to press the partition against the inner case to minimize a gap between the partition and the inner case.

The effects to be obtained from the present disclosure are not limited to those mentioned above, and other effects not mentioned will be apparent to those of skilled in the art from the following description.

### [Description of Drawings]

FIG. 1 is a perspective view of a refrigerator according to an embodiment of the present disclosure.
FIG. 2 is a side cross-sectional view of the refrigerator according to an embodiment of the present disclosure.
FIG. 3 is an exploded perspective view illustrating an inner case, a partition, and a fixer of the refrigerator according to an embodiment of the present disclosure.
FIG. 4 is a perspective view of the partition of the refrigerator according to an embodiment of the present disclosure.
FIG. 5 is a perspective view of the fixer, according to an embodiment of the present disclosure, from a side portion.
FIG. 6 is a perspective view of the fixer, according to an embodiment of the present disclosure, from a side portion.
FIG. 7 is a perspective view of the inner case according to an embodiment of the present disclosure.
FIG. 8 is a perspective view of the fixer coupled with the inner case, according to an embodiment of the present disclosure.
FIG. 9 is a perspective view illustrating the inner case coupled with the fixer and the partition, according to an embodiment of the present disclosure.
FIG. 10 is a longitudinal cross-sectional view illustrating the inner case coupled with the fixer and the partition, according to an embodiment of the present disclosure.
FIG. 11 is a transverse cross-sectional view illustrating the inner case coupled with the fixer and the partition, according to an embodiment of the present disclosure.

### [Modes of the Invention]

Various embodiments of the present document and terms used therein are not intended to limit the technical features described in this document to specific embodiments, and should be understood to include various modifications, equivalents, or substitutes of the corresponding embodiments.

In addition, the same reference numerals or signs shown in the drawings of the disclosure indicate elements or components performing substantially the same function.

Also, the terms used herein are used to describe the embodiments and are not intended to limit and/or restrict the disclosure. The singular forms "a," "an" and "the" are intended to include the plural forms as well, unless the context clearly indicates otherwise. In this disclosure, the terms "including", "having", and the like are used to specify features, figures, steps, operations, elements, components, or combinations thereof, but do not preclude the presence or addition of one or more of the features, figures, steps, operations, elements, components, or combinations thereof.

It will be understood that, although the terms "first", "second", "primary", "secondary", etc., may be used herein to describe various elements, but elements are not limited by these terms. These terms are only used to distinguish one element from another element. For example, without departing from the scope of the disclosure, a first element may be termed as a second element, and a second element may be termed as a first element. The term of "and/or" includes a plurality of combinations of relevant items or any one item among a plurality of relevant items.

Further, as used in the disclosure, the terms "front", "rear", "top", "bottom", "side", "left", "right", "upper", "lower", and the like are defined with reference to the drawings, and are not intended to limit the shape and position of any element.

Hereinafter, various embodiments according to the disclosure will be described in detail with reference to the accompanying drawings.

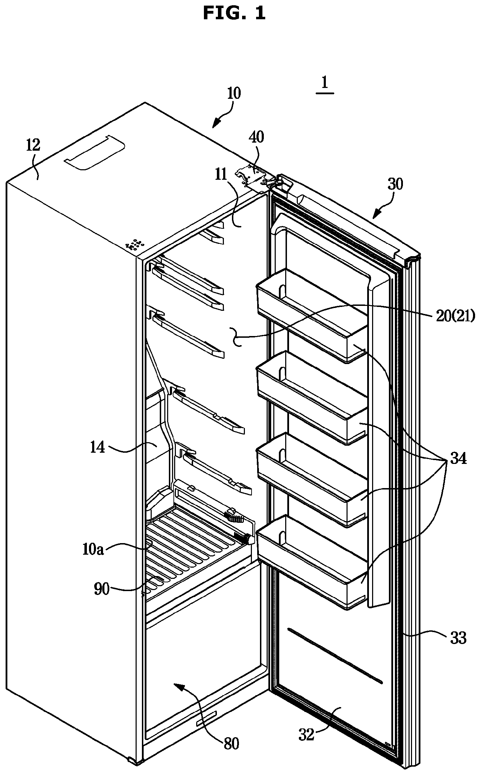

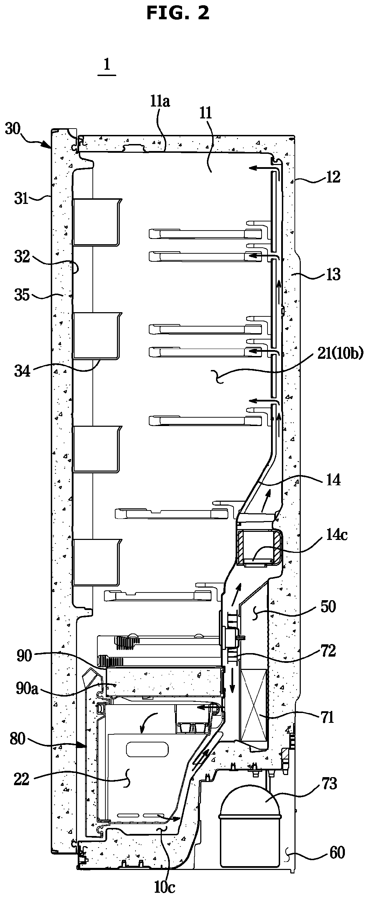

FIG. 1 is a perspective view of a refrigerator according to an embodiment of the present disclosure. FIG. 2 is a side cross-sectional view of the refrigerator according to an embodiment of the present disclosure.

Referring to FIGS. 1 and 2, a refrigerator 1 may include a main body 10, a storage compartment 20 arranged inside the main body 10, a door 30 configured to open or close the storage compartment 20, and a cooling system configured to supply cold air to the storage compartment 20.

The main body 10 may be formed with an open front to allow a user to store or remove food into or from the storage compartment 20. In other words, the main body 10 may include an opening 10a formed on a front side of the main body 10. The opening 10a of the main body 10 may be opened and closed by the door 30.

The main body 10 may include an inner case 11 forming the storage compartment 20 therein, an outer case 12 coupled to an outer side of the inner case 11 to form an exterior of the refrigerator 1, and a main body insulation 13 disposed between the inner case 11 and the outer case 12.

The outer case 12 may be formed to have the shape of a box with a substantially open front. The outer case 12 may form upper and lower surfaces, left and right side surfaces, and a rear surface of the refrigerator 1.

The outer case 12 may be configured to include a metallic material. For example, the outer case 12 may be manufactured by machining a steel plate material.

The inner case 11 may be open at the front. The inner case 11 may be provided with the storage compartment 20 on the inner side and may be arranged on the inner side of the outer case 12. An inner wall 11a of the inner case 11 may form the storage compartment 20. The inner wall 11a of the inner case 11 may include an upper wall, a lower wall, and side walls 11aa and 11ab. The side walls 11aa and 11ab may include a first side wall 11aa and a second side wall 11ab located opposite the first side wall 11aa.

The inner case 11 may be configured to include a plastic material. In an example, the inner case 11 may be manufactured by a vacuum forming process. In an example, the inner case 11 may be manufactured by an injection molding process.

The main body insulation 13 may be configured such that the outer case 12 and the inner case 11 are thermally insulated from each other. The main body insulation 13 may be foamed between the inner case 11 and the outer case 12 to bond the inner case 11 and the outer case 12. The main body insulation 13 may prevent heat exchange from occurring between an inside of the storage compartment 20 and an outside of the main body 10, thereby improving the cooling efficiency of the inside of the storage compartment 20.

The main body insulation 13 may include urethane foam insulation, expanded polystyrene (EPS) insulation, vacuum insulation panel, and the like. However, the present disclosure is not limited thereto, and the main body insulation 13 may be configured to include a variety of materials.

The internal space of the main body 10 may include a first internal space 10b and a second internal space 10c. The second internal space 10c may be arranged on a lower side of the first internal space 10b. In an example, the first internal space 10b may be formed on an upper portion of the interior of the main body 10, and the second internal space 10c may be formed on a lower portion of the interior of the main body 10.

The first internal space 10b and the second internal space 10c may be formed on the inner side of the inner case 11. In other words, the first internal space 10b may refer to a portion of the internal space formed on the inner side of the inner case 11, and the second internal space 10c may refer to another portion of the internal space formed on the inner side of the inner case 11, which may be defined as referring to a portion located below the first internal space 10b.

The first internal space 10b and the second internal space 10c may each be supplied with cold air generated by a cold air supply device, which will be described later. The first internal space 10b and the second internal space 10c may each be configured to be in communication with a cooling room 50. The cold air generated by the cold air supply device may flow from the cooling room 50 to the first internal space 10b and the second internal space 10c.

The storage compartment 20 may be formed on the inner side of the main body 10. The storage compartment 20 may include a refrigerating compartment 21 maintained at approximately 0 to 5 degrees Celsius for refrigerating food and a freezing compartment 22 maintained at approximately -30 to 0 degrees Celsius for freezing food.

The refrigerating compartment 21 may be provided in the first internal space 10b of the main body 10. The refrigerating compartment 21 may be arranged at an upper portion of the internal space of the main body 10. The refrigerating compartment 21 may be arranged on the upper side of the second internal space 10c.

Cold air entering the first internal space 10b from the cooling room 50 may enter the refrigerating compartment 21, and the first internal space 10b may be maintained at a temperature suitable for refrigerating food.

In an example, the refrigerating compartment 21 may be a space that approximately correspond to the first internal space 10b of the main body 10. It should be noted that the first internal space 10b may refer to a space itself formed within the main body 10, while the refrigerating compartment 21 may refer to a portion of the storage compartment 20 for storing food.

The refrigerating compartment 21 may be provided with shelves (not shown) on which food may be placed, storage containers (not shown) in which food may be stored, and the like.

The freezing compartment 22 may be configured to be in or out of the second internal space 10c of the main body 10. More particularly, the freezing compartment 22 may be arranged within a freezing compartment case 80, and the freezing compartment case 80 may be configured to be in or out of the second internal space 10c. When the freezing compartment case 80 is pulled into the second internal space 10c, the freezing compartment 22 may be inserted and the freezing compartment 22 may be closed. When the freezing compartment case 80 is pulled out of the second internal space 10c, the freezing compartment 22 may be removed and the freezing compartment 22 may be opened.

In other words, the freezing compartment 22 may be located on the inner side of the main body 10 when the freezing compartment case 80 is inserted, and conversely, the freezing compartment 22 may be located at least partially on the outer side of the main body 10 when the freezing compartment case 80 is removed. However, the present disclosure is not limited thereto, and depending on the size of the freezing compartment case 80 or the length by which the freezing compartment case 80 may be pulled out, the freezing compartment 22 may also be located on the inner side of the main body 10 even when the freezing compartment case 80 is pulled out.

The freezing compartment 22 may be a space provided within the freezing compartment case 80, and be a portion of the storage compartment 20 in which food may be stored and kept frozen. The freezing compartment 22 may share some space with the second internal space 10c, but the freezing compartment 22 may be distinct from the second internal space 10c in that the freezing compartment 22 may be inserted or removed together with the freezing compartment case 80, while the space in which the food is directly stored is the freezing compartment 22 arranged on the inside of the freezing compartment case 80.

The freezing compartment 22 may be located in the second internal space 10c when the freezing compartment case 80 is in a position to be inserted into the second internal space 10c. Cold air entering the second internal space 10c from the cooling room 50 may enter the freezing compartment 22, and thus the second internal space 10c may be maintained at a temperature suitable for keeping food frozen.

As such, the refrigerator 1 according to an embodiment of the present disclosure may have the refrigerating compartment 21 arranged in the first internal space 10b, and the freezing compartment 22 arranged in the second internal space 10c disposed below the first internal space 10b. In other words, the refrigerator 1 according to an embodiment of the present disclosure may be a Bottom Mounted Freezer (BMF) type refrigerator in which the refrigerating compartment 21 is formed on the upper side and the freezing compartment 22 is formed on the lower side.

The main body 10 may include a partition 90 that divides the first internal space 10b and the second internal space 10c. The partition 90 may be arranged between the first internal space 10b and the second internal space 10c. More particularly, the main body 10 may include the partition 90 that compartmentalizes the first internal space 10b and the second internal space 10c in a vertical direction.

The partition 90 may divide the first internal space 10b and the second internal space 10c in a direction horizontal to the ground. The partition 90 may extend in a direction horizontal to the ground.

An upper surface 92 of the partition 90 may face the first internal space 10b. The upper surface 92 of the partition 90 may form a lower surface of the first internal space 10b. The upper surface 92 of the partition 90 may form a lower surface of the refrigerating compartment 21.

A lower surface 94 of the partition 90 may face the second internal space 10c. The lower surface 94 of the partition 90 may form a lower surface of the second internal space 10c. The lower surface 94 of the partition 90 may cover an upper side of the freezing compartment 22 when the freezing compartment case 80 is inserted into the second internal space 10c. The lower surface 94 of the partition 90 may form an upper surface of the freezing compartment 22 when the freezing compartment case 80 is inserted into the second internal space 10c.

The partition 90 may be disposed on the inside of the inner case 11. The partition 90 may be coupled to the inner wall 11a of the inner case 11. This will be described later.

As described above, the refrigerating compartment 21 may be provided in the first internal space 10b, and the freezing compartment 22 may be provided in the second internal space 10c. Accordingly, the first internal space 10b and the second internal space 10c may need to be maintained at different temperatures.

The partition 90 may separate the first internal space 10b and the second internal space 10c such that they are insulated from each other. The partition 90 may be configured such that the refrigerating compartment 21 and the freezing compartment 22 are insulated from each other when the freezing compartment case 80 is inserted.

In an example, the partition 90 may include a partition insulation 90a arranged on the inside of the partition 90. The partition insulation 90a may be formed by foaming between the upper and lower surfaces of the partition 90.

The partition insulation 90a may be configured to prevent heat exchange from occurring between the first internal space 10b and the second internal space 10c, so that the refrigerating compartment 21 and the freezing compartment 22 may be maintained at different temperatures.

The partition insulation 90a may use, for example, urethane foam insulation, EPS insulation, vacuum insulation panel, and the like. However, the present disclosure is not limited thereto, and the partition insulation 90a may be formed from a variety of materials.

In an example, the partition insulation 90a may be formed of insulation of the same material as the main body insulation 13. Alternatively, in an example, the partition insulation 90a may be formed of insulation of different materials from the main body insulation 13.

The partition 90 may be manufactured in such a way that the partition insulation 90a is first foamed on the inside of the partition 90 during a manufacturing step, and then coupled to the inner case 11. In other words, the partition insulation 90a may be foamed separately from the main body insulation 13, and then may be post-assembled to the inner case 11 after the main body insulation 13 has been foamed.

The refrigerator 1 may include a cooling system that generates cold air using a cooling cycle and supplies the generated cold air to the first internal space 10b and the second internal space 10c.

The cooling system may generate cold air using the latent heat of evaporation of the refrigerant in the cooling cycle. The cooling system may be configured to include a compressor 73, a condenser (not shown), an expansion valve (not shown), an evaporator 71, a blower fan 72, and the like.

The cooling room 50 and a machine room 60 in which the cooling system is arranged may be provided in the main body 10. For example, the cooling room 50 may be provided with configurations, such as the evaporator 71 that generates cold air and the blower fan 72 that allows the cold air generated by the evaporator 71 to flow. The machine room 50 may be provided with configurations, such as the compressor 73, the condenser, and the like.

The cooling room 50 may be arranged on a rear side of the first internal space 10b. The cooling room 50 may be arranged on a rear side of the second internal space 10c.

The machine room 60 may be arranged on the rear side of the first internal space 10b. The machine room 60 may be arranged on the rear side of the second internal space 10c.

The parts of the refrigerator 1 constituting the cooling system may have a relatively significant weight. Accordingly, the cooling room 50 and the machine room 60 may be arranged in a lower portion of the main body 10. However, the present disclosure is not limited thereto, and the cooling room 50 and the machine room 60 may be arranged in a variety of ways, and the parts constituting the cooling system may be arranged in a variety of ways to correspond to the positions of the cooling room 50 and the machine room 60.

In the cooling room 50, cold air may be generated by the evaporator 71 and thus a relatively low temperature state may be maintained. On the other hand, in the machine room 60, heat may be generated by the compressor 73, the condenser, and the like and thus a relatively high temperature state may be maintained. As a result, the cooling room 50 and the machine room 60 may be formed in distinct spaces from each other and may be insulated from each other. For example, the mina body insulation 13 may be foamed between the cooling room 50 and the machine room 60.

As shown in FIG. 2, the evaporator 71 provided in the cooling room 50 may evaporate the refrigerant to generate cold air, and the cold air generated by the evaporator 71 may be flowed by the blower fan 72. A portion of the cold air flowed by the blower fan 72 may be supplied to the first internal space 10b, and another portion of the cold air flowed by the blower fan 72 may be supplied to the second internal space 10c. In other words, the evaporator 71 may generate cold air in the cooling room 50, and the cold air generated by the evaporator 71 may flow from the cooling room 50 to the storage compartment 20 by the blower fan 72 provided in the cooling room 50. The cooling room 50 may be configured to communicate with the first internal space 10b and the second internal space 10c, respectively.

The evaporator 71, the blower fan 72, and the like arranged in the cooling room 50 may be referred to as a cold air supply device in that they generate cold air and supply the cold air to the storage compartment 20.

The main body 10 may include a cold air supply duct (not shown). The cold air supply duct (not shown) may form a flow path through which the cold air generated by the cold air supply device flows from the cooling room 50 to the first internal space 10b or the second internal space 10c. The first internal space 10b and the second internal space 10c may each be configured to communicate with the cold air supply duct (not shown).

The door 30 may be arranged to open or close the main body 10. The door 30 may be rotatably coupled to the main body 10. More particularly, the door 30 may be rotatably coupled to the main body 10 by a hinge 40 connected to the door 30 and the main body 10, respectively. The door 30 may be rotatably coupled to the outer case 12.

An outer surface 31 of the door 30 may form a portion of the exterior of the refrigerator 1. When the door 30 is in a closed position, the outer surface 31 of the door 30 may form the front surface of the door 30.

An inner surface 32 of the door 30 may be formed on an opposite side to the outer surface 31 of the door 30. When the door 30 is in the closed position, the inner surface 32 of the door 30 may form a rear surface of the door 30. When the door 30 is in the closed position, the inner surface 32 of the door 30 may be arranged to face the inner surface of the main body 10. When the door 30 is in the closed position, the inner surface 32 of the door 30 may be arranged to cover the front of the first inner space 10b and the second inner space 10c.

A foamed space may be formed between the outer surface 31 of the door 30 and the inner surface 32 of the door 30, and a door insulation 35 may be foamed thereto. The door insulation 35 may prevent heat exchange from occurring between the outer surface 31 of the door 30 and the inner surface 32 of the door 30. The door insulation 35 may improve the insulation performance between the inside of the storage compartment 20 and the outside of the door 20.

The door insulation 35 may use, for example, urethane foam insulation, EPS insulation, vacuum insulation panels, and the like. However, the present disclosure is not limited thereto, and the door insulation 35 may be configured to include a variety of materials.

In an example, the door insulation 35 may be configured to include insulation of the same material as the main body insulation 13 or the partition insulation 90a. Alternatively, in an example, the door insulation 35 may be configured of insulation of different materials from the main body insulation 13 or the partition insulation 90a.

A door gasket 33 may be arranged on the inner surface 32 of the door 30 to seal a gap between the door 30 and the main body 10 to prevent cold air from leaking from the storage compartment 20. The door gasket 33 may be provided along a circumference of the inner surface 32 of the door 30. The door gasket 33 may be arranged to be aligned with the opening 10a of the main body 10 in response to closing of the door 30 is closed. The door gasket 33 may be configured to include an elastic material, such as rubber.

A door shelf 34 for storing food may be provided on the inner surface 32 of the door 30.

The door 30 may be provided as a single door, rotatably coupled to the main body 10 and enabled to open or close the main body 10.

The door 30 may close the first internal space 10b and/or the second internal space 10c in response to the closing of the opening 10a of the main body 10. The door 30 may cover the front of the first internal space 10b and/or the second internal space 10c in response to the closing of the opening 10a of the main body 10.

The door 30 may cover the front of the partition 90 in response to the closing of the opening 10a of the main body 10. In other words, the partition 90 may be disposed entirely on the inside of the main body 10, and in response to the closing of the opening 10a of the main body 10, the partition 90 may be covered by the door 30 and not be exposed to the outside.

The configurations of the refrigerator 1 described above with reference to FIGS. 1 and 2 are only an example to describe the refrigerator according to the spirit of the present disclosure, and the present disclosure is not limited thereto. The refrigerator according to the spirit of the present disclosure may be configured to include various configurations to perform the function of supplying cold air to the refrigerating compartment and the freezing compartment for storing food.

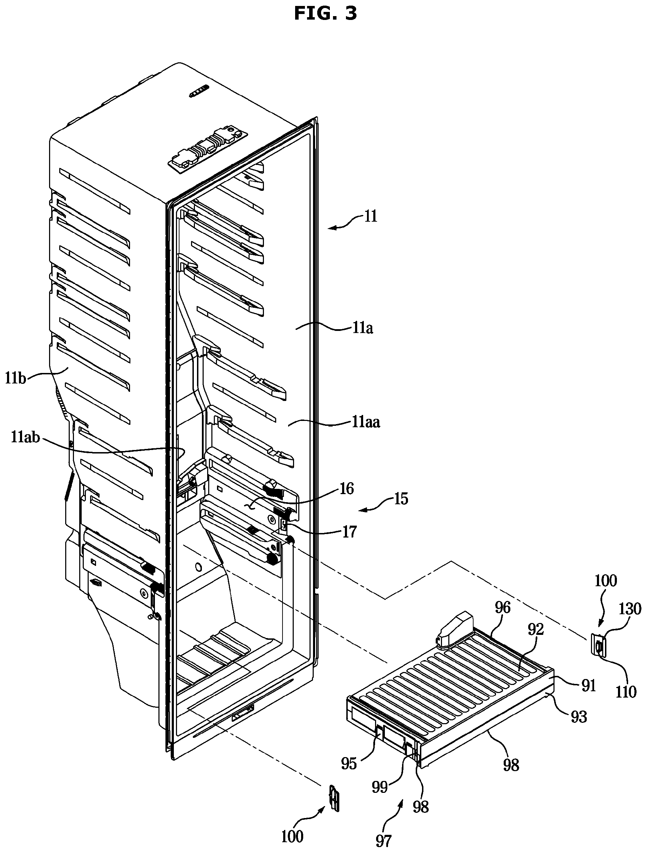

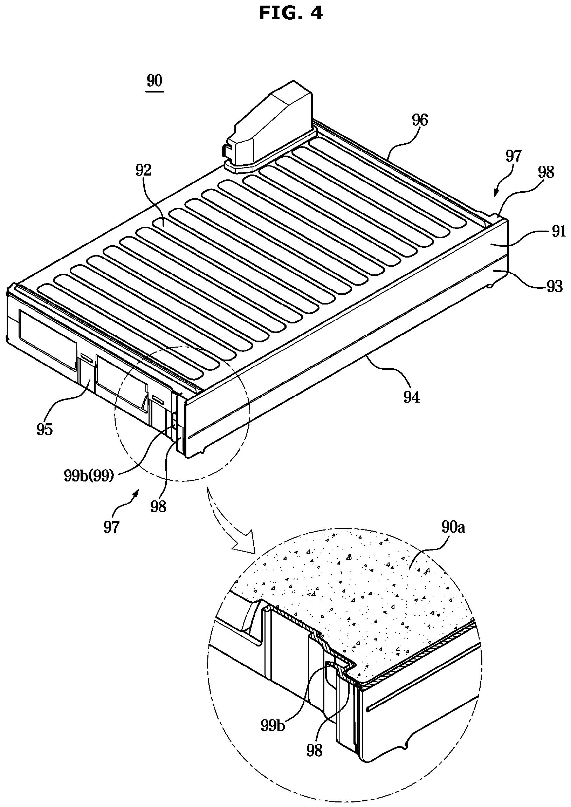

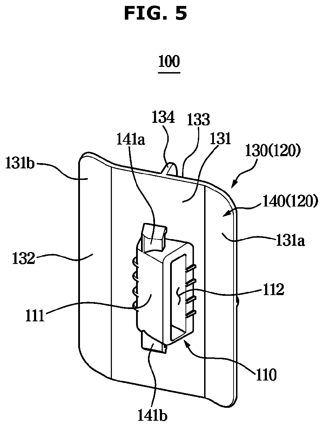

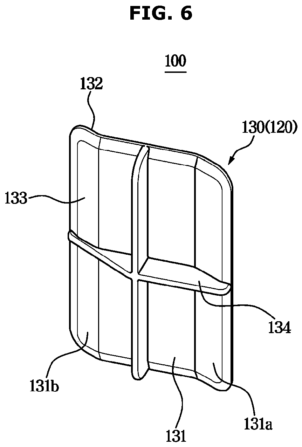

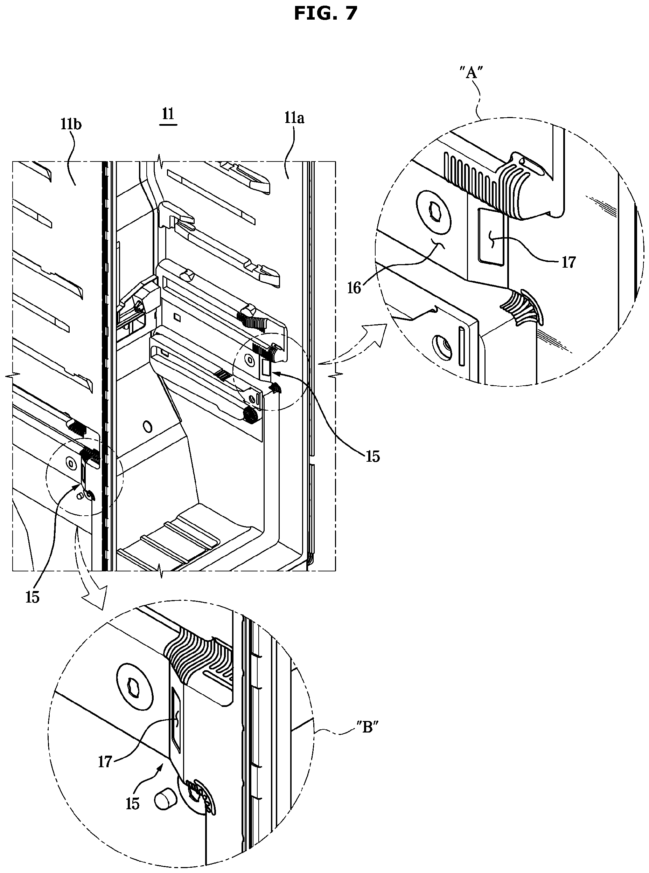

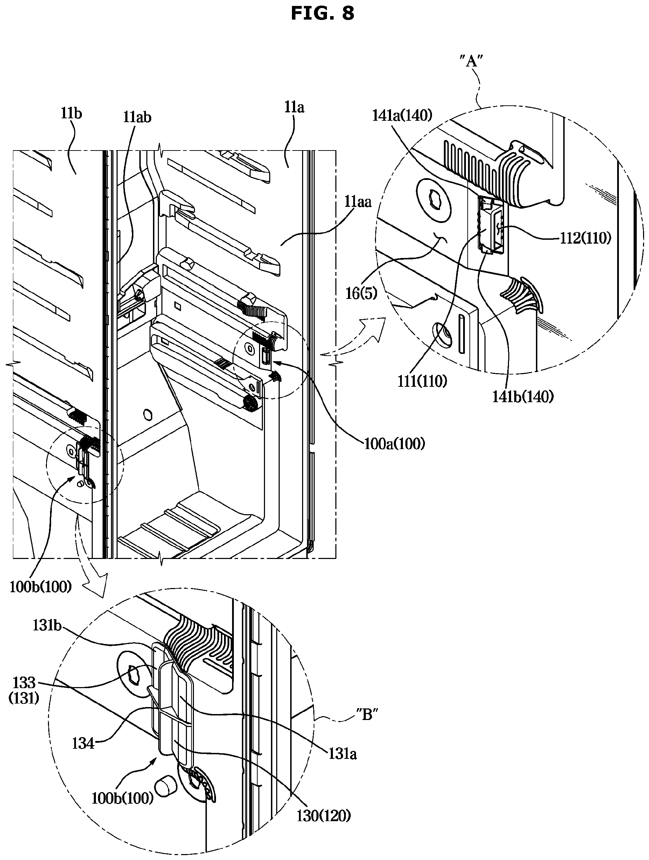

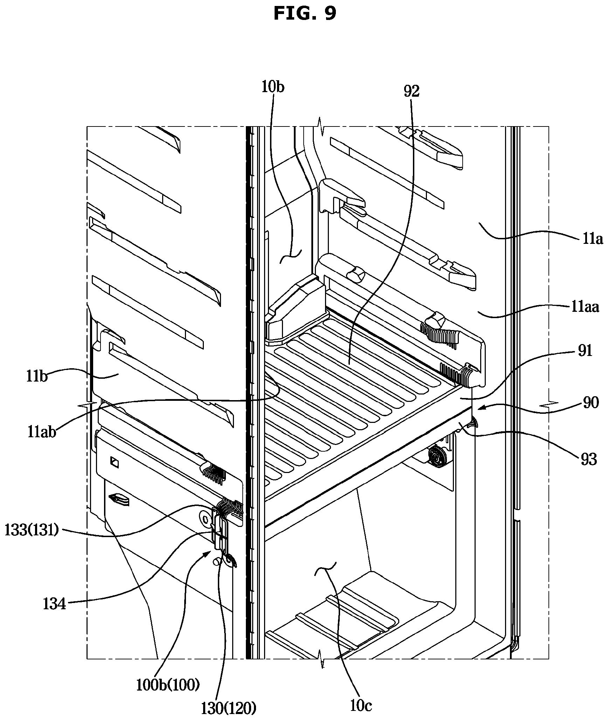

FIG. 3 is an exploded perspective view of the inner case, the partition, and a fixer of the refrigerator according to an embodiment of the present disclosure. FIG. 4 is a perspective view of the partition of the refrigerator according to an embodiment of the present disclosure. FIG. 5 is a perspective view of the fixer from a side portion according to an embodiment of the present disclosure. FIG. 6 is a perspective view of the fixer from a side portion according to an embodiment of the present disclosure. FIG. 7 is a perspective view of the inner case according to an embodiment of the present disclosure. FIG. 8 is a perspective view of the fixer coupled with the inner case according to an embodiment of the present disclosure. FIG. 9 is a perspective view of the inner case coupled with the fixer and the partition according to an embodiment of the present disclosure.

Referring to FIG. 3, the partition 90 may be coupled to the inner case 11 in a prefabricated manner. The partition 90 may be secured to the inner case 11 by being coupled to a fixer 100.

Referring to FIG. 3 and FIG. 4, the partition 90 may include an upper partition 91 and a lower partition 93. The upper partition 91 may form the upper surface 92 of the partition 90, and the lower partition 93 may form the lower surface 94 of the partition 90. A foaming space may be formed between the upper partition 91 and the lower partition 93, and thus the partition insulation 90a may be foamed.

The upper partition 91 and the lower partition 93 may be coupled together. However, the present disclosure is not limited thereto, and the upper partition 91 and the lower partition 93 may be integrally formed.

The partition 90 may include a front surface positioned adjacent to the door 30 of the refrigerator 1 and a rear surface positioned opposite the front surface. The partition 90 may include a first side surface 95 connecting the front surface and the rear surface and a second side surface 96 positioned opposite the first side surface 95. The first side surface 95 may be positioned at the first side of the partition 90, and the second side surface 96 may be positioned at the second side of the partition 90.

The partition 90 may include a partition coupling portion 97. The partition coupling portion 97 may be arranged on the first side surface 95 and/or the second side surface 96 of the partition 90. The partition coupling portion 97 may be arranged on the front side of the partition 90. However, the present disclosure is not limited thereto, and the partition coupling portion 97 may be provided at different positions on the partition 90.

The partition coupling portion 97 may include a coupling hook 98. The coupling hook 98 may protrude toward the inner wall 11a of the inner case 11. The coupling hook 98 may protrude from the first side surface 95 of the partition 90 toward the first side wall 11aa of the inner case 11. The coupling hook 98 may protrude from the second side surface 96 of the partition 90 toward the second side wall 11ab of the inner case 11. The coupling hook 98 may protrude in a direction perpendicular to the direction in which the first side surface 95 and/or the second side surface 96 of the partition 90 extend.

The coupling hook 98 may be supported in an inner case support groove 16 of an inner case coupling portion 15, so that the partition 90 may be fixedly attached to the inner case 11.

The partition coupling portion 97 may include a coupling protrusion 99. The coupling protrusion 99 may be formed to protrude so as to be coupled with the fixer 100. The coupling protrusion 99 may be arranged on the coupling hook 98. The coupling protrusion 99 may extend rearwardly. The coupling protrusion 99 may extend toward a recessed direction of the fixer coupling groove 112 of the fixer 100.

The coupling protrusion 99 may be formed on the upper partition 91 and/or the lower partition 93.

The coupling protrusion 99 may include a first coupling protrusion 99a provided on the first side surface 95 and a second coupling protrusion 99b provided on the second side surface 96. In other words, the first side surface 95 of the partition 90 may be attached to the first side wall 11aa of the inner case 11 and the second side surface 96 of the partition 90 may be attached to the second side wall 11ab of the inner case 11, so that the partition 90 may be fixedly attached to the inner case 11.

Referring to FIGS. 5 and 6, the fixer 100 may include a fixer coupling portion 110. The fixer coupling portion 110 may be coupled with the partition coupling portion 97 to couple the partition 90 to the fixer 100. The fixer coupling portion 110 may be arranged to correspond to the partition coupling portion 97.

The fixer coupling portion 110 may be arranged to face the inner side of the inner case 11 from a fixer outer holding portion 130. The fixer coupling portion 110 may protrude from a plate 131 to face an inward side of the inner case 11. The fixer coupling portion 110 may extend from the fixer outer holding portion 130 to face the partition 90.

The fixer coupling portion 110 may include a fixer protrusion 111. The fixer protrusion 111 may be arranged on an inner surface 132 of the plate 131. The fixer protrusion 111 may be formed to protrude from the inner surface 132 of the plate 131. The fixer protrusion 111 may have an approximately triangular prism shape. However, the present disclosure is not limited thereto, and the fixer protrusion 111 may have other shapes.

The fixer coupling portion 110 may include the fixer coupling groove 112. The fixer coupling groove 112 may be configured to allow the coupling protrusion 99 of the partition 90 to be inserted therein.

The fixer coupling groove 112 may be provided in the fixer protrusion 111. The fixer coupling groove 112 may be provided in a front side of the fixer protrusion 111.

The fixer coupling groove 112 may be a recessed groove. The fixer coupling groove 112 may be recessed along a direction in which the coupling protrusion 99 extends. The fixer coupling groove 112 may be recessed rearwardly.

The fixer coupling groove 112 may be formed corresponding to the shape of the coupling protrusion 99. The fixer coupling groove 112 may have an approximately rectangular shape.

The partition 90 may be easily attached to the inner case 11 by inserting the coupling protrusion 99 into the fixer coupling groove 112.

The fixer 100 may include a fixer fixing portion 120. The fixer fixing portion 120 may be configured to allow the fixer 100 to be attached to the inner case 11. The fixer fixing portion 120 may be arranged to press against the inner case 11. The fixer fixing portion 120 may be configured to allow the partition 90 coupled to the fixer coupling portion 110 to be attached to the inner case 11.

The fixer fixing portion 120 may include the fixer outer holding portion 130. The fixer outer holding portion 130 may be connected to the fixer coupling portion 110. The fixer outer holding portion 130 may be formed integrally with the fixer coupling portion 110. The fixer outer holding portion 130 may extend from the fixer coupling portion 110 toward the outer side of the inner case 11.

The fixer outer holding portion 130 may include the plate 131. The plate 131 may have an approximately rectangular shape. The plate 131 may include the inner surface 132 and the outer surface 133. The inner surface 132 of the plate 131 may extend with the fixer coupling portion 110. The outer surface 133 of the plate 131 may be arranged to face the outer side of the inner case 11 from the inner surface 132.

The plate 131 may include curved surfaces 131a and 131b. The curved surfaces 131a and 131b may be formed at opposite ends of the plate 131. The curved surfaces 131a and 131b may be formed to correspond to the shape of the inner case 11. Since the plate 131 includes the curved surfaces 131a and 131b, the plate may be in close contact with the inner case 11.

A reinforcing rib 134 may be formed on the outer surface 133 of the plate 131. The reinforcing rib 134 may extend along an extension direction of the plate 131. The reinforcing ribs 134 may be provided in a plurality. The plurality of reinforcing ribs 134 may be arranged to be orthogonal to each other.

The fixer fixing portion 120 may include a fixer inner holding portion 140. The fixer inner holding portion 140 may be connected to the fixer coupling portion 110. The fixer inner holding portion 140 may be formed integrally with the fixer coupling portion 110. The fixer inner holding portion 140 may extend from the fixer coupling portion 110 toward the inner wall 11a of the inner case 11.

The fixer inner holding portion 140 may include a hook 141. The hook 141 may extend toward the plate 131. The hooks 141 may be provided in a plurality. The hooks 141 may be provided in a pair at both ends of the fixer protrusion 111.

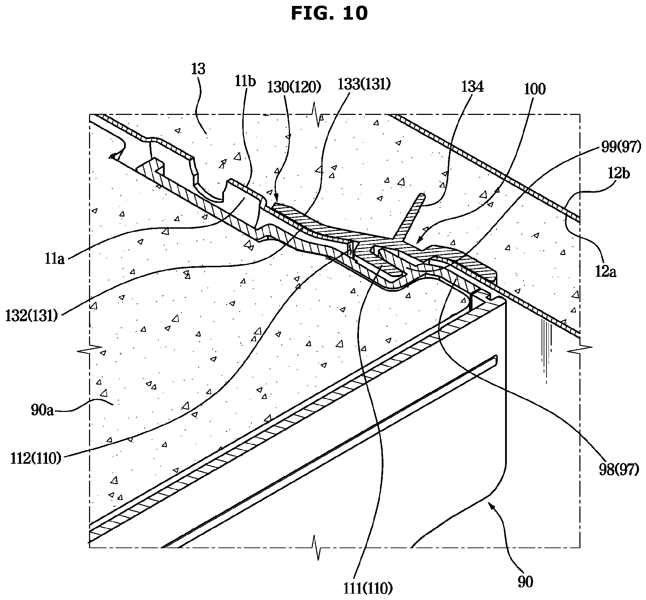

One end 142 of the hook 141 may include a bent member 143 (see FIG. 10). The bent member 143 may be arranged to correspond to a bent wall 11c extending from the inner wall 11a of the inner case 11 to an inner case through-hole 17. Accordingly, the fixer 100 may be easily inserted into the inner case through-hole 17, and the hook 141 may be supported on the inner wall 11a.

The fixer 100 may be configured to include a plastic material. In an example, the fixer 100 may include a polyoxymethylene (POM) material.

Referring to FIG. 7, the inner case 11 may include the inner case coupling portion 15 to which the partition 90 is coupled. The inner case coupling portion 15 may be a portion in contact with the partition 90. The inner case coupling portion 15 may be the inner wall 11a of the inner case 11 that is arranged to face the partition.

The inner case coupling portion 15 may include the inner case support groove 16 in which the partition 90 is seated. The inner case support groove 16 may be recessed so as to support the partition 90. The inner case support groove 16 may be recessed in the inner wall 11a of the inner case 11. The partition 90 may be inserted into and coupled to the inner case support groove 16.

The inner case support groove 16 may include a first inner case support groove 16 positioned on the first side wall 11aa and a second inner case support groove 16 positioned on the second side wall 11ab.

The first inner case support groove 16 may support the first side surface 95 of the partition 90. The first inner case support groove 16 may contact the first side surface 95 of the partition 90. The second inner case support groove 16 may support the second side surface 96 of the partition 90. The second inner case support groove 16 may contact the second side surface 96 of the partition 90.

The inner case coupling portion 15 may include the inner case through-hole 17 to which the fixer 100 is coupled. The fixer 100 may be arranged to penetrate the inner case through-hole 17.

The inner case through-hole 17 may be formed to penetrate the inner case 11. The inner case through-hole 17 may be formed to penetrate the outer wall 11b and the inner wall 11a of the inner case 11. The inner case through-hole 17 may have an approximately rectangular shape. However, the present disclosure is not limited thereto. For example, the inner case through-hole 17 may have a circular shape.

The inner case through-hole 17 may be provided in the inner case support groove 16. The inner case through-hole 17 may include a first inner case through-hole 17 provided in the first inner case support groove 16. The inner case through-hole 17 may include a second inner case through-hole 17 provided in the second inner case support groove 16. However, the present disclosure is not limited thereto, and the inner case through-hole 17 may be provided in other portions of the inner case 11.

Referring to FIG. 8, the fixer 100 may be coupled to the inner case 11 of the refrigerator 1. The fixer 100 may be coupled to the inner case through-hole 17. The fixer 100 may be arranged to penetrate the inner wall 11a and the outer wall 11b of the inner case 11.

A first fixer 100a may be arranged to penetrate the first side wall 11aa, and a second fixer 100b may be arranged to penetrate the second side wall 11ab.

The process of coupling the fixer 100 to the inner case through-hole 17 will be described below. The fixer 100 may be approached from the outer side of the inner case 11 toward the inner case through-hole 17. At this point, the fixer coupling portion 110 and/or the fixer inner holding portion 140 of the fixer 100 may be arranged to face the inner case 11, and the outer surface 133 of the plate 131 of the fixer outer holding portion 130 of the fixer 100 may be arranged to face the outer case 12.

Then, the fixer coupling portion 110 may be inserted into the inner case through-hole 17, such that the fixer 100 may be coupled to the inner case through-hole 17.

However, the present disclosure is not limited thereto, and the fixer 100 may be coupled to the inner case through-hole 17 in other ways as well. For example, the fixer 100 may be approached from the inner side of the inner case through-hole 17 toward the inner case through-hole 17. In other words, the fixer 100 may be coupled to the inner case through-hole 17 by inserting the plate 131 into the inner case through-hole 17 with the outer surface 133 of the plate 131 of the fixer outer holding portion 130 of the fixer 100 being arranged to face the inner case through-hole 11.

The fixer coupling portion 110 and/or the fixer inner holding portion 140 of the fixer 100 may be arranged on the inner side of the inner case 11. The fixer outer holding portion 130 of the fixer 100 may be arranged on the outer side of the inner case 11.

The plate 131 of the fixer 100 may be in contact with the outer wall 11b of the inner case 11. The plate 131 may include the curved surfaces 131a and 131b, and thus the plate 131 may be in close contact with the outer wall 11b of the inner case 11.

The hook 141 of the fixer 100 may be in contact with the inner wall 11a of the inner case 11. The one end 142 of the hook 141 may include the bent portion 143, and thus it may correspond to the bent wall 11c of the inner case 11 which is bent into the inner case through-hole 17.

After the fixer 100 is coupled to the inner case 11, an insulating material (not shown) may be foamed between the inner case 11 and the outer case 12.

Then, referring to FIG. 9, the partition 90 may be coupled to the fixer 100. More particularly, as the partition 90 is inserted from the front to the rear, the coupling protrusion 99 of the partition 90 may be inserted into the fixer coupling groove 112 of the fixer 100.

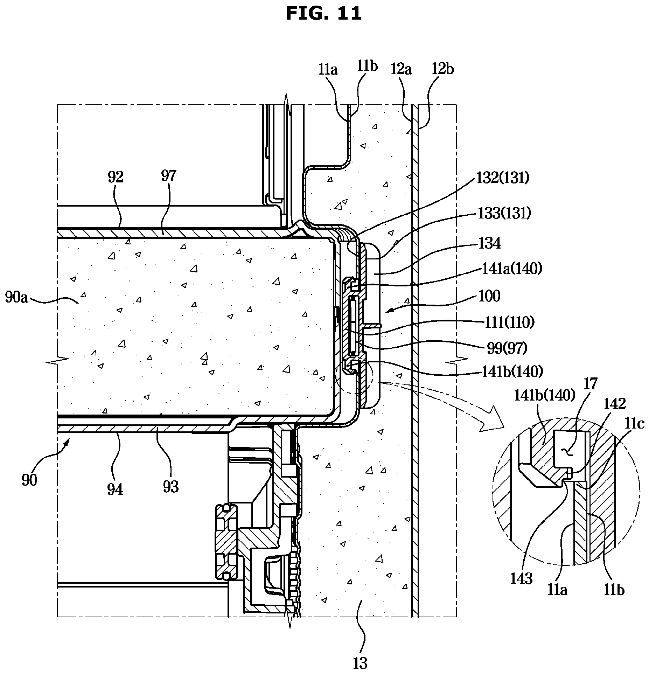

FIG. 10 is a longitudinal cross-sectional view showing the inner case coupled with the fixer and the partition according to an embodiment of the present disclosure. FIG. 11 is a transverse cross-sectional view showing the inner case coupled with the fixer and the partition according to an embodiment of the present disclosure.

The coupling protrusion 99 of the partition 90 may be inserted into the fixer coupling groove 112 of the fixer 100.

The inner surface 132 of the plate 131 of the fixer 100 may be supported on the outer wall 11b of the inner case 11. The plate 131 may include the curved surfaces 131a and 131b, and thus the plate 131 may be fit more closely against the outer wall 11b of the inner case 11.

The fixer 100 may be coupled with the partition 90 and simultaneously supported on the outer wall 11b of the inner case 11, thereby applying a force to the partition 90 toward the inner case 11 to attach the partition 90 to the inner case 11.

Since the fixer outer holding portion 130 has the plate 131 shape, the area in contact with the outer wall 11b of the inner case 11 may be increased, so that it may be firmly supported on the outer wall 11b.

The inner case 11 may shrink according to use of the refrigerator 1. More particularly, as the main body insulation 13 foamed between the inner case 11 and the outer case 12 shrinks, the inner case 11 may be bent toward the outer case 12.

In particular, as the inner walls 11a located on the left and right sides of the inner case 11 are spread outwardly, a gap may occur between the inner wall 11a and the partition 90 arranged to be in contact with the inner wall 11a.

According to the present disclosure, the fixer 100 may restrain the force of the inner case 11 to spread outwardly by constraining the inner case 11 to the partition 90. More particularly, the side walls 11aa and 11ab of the inner case 11 may be constrained to the side surfaces 95 and 96 of the partition 90, thereby forcing the inner case 11 and the partition 90 into close contact.

Since the fixer coupling portion 110 is arranged on the inner side of the inner case 11 by being coupled with the partition 90, the fixer outer holding portion 130 connected thereto may be pressed against the inner side of the inner case 11. Since the plate 131 of the fixer outer holding portion 130 is pressed inwardly against the outer wall 11b of the inner case 11, the phenomenon of the inner case 11 spreading outwardly may be prevented. Since the fixer outer holding portion 130 includes the plate 131, the area of the force exerted by the plate 131 on the inner case 11 may be increased, thereby suppressing the force of the inner case 11 spreading out.

In addition, since the fixer inner holding portion 140 is supported on the inner wall 11a of the inner case 11, the fixer 100 may be more firmly coupled to the inner case 11. Since the fixing inner holding portion 140 extends from the fixing coupling portion 110 and contact the inner wall 11a, the fixing coupling portion 110 coupled with the partition 90 may be arranged to be attached to the inner case 11.

Accordingly, the gap formed between the inner case 11 and the partition 90 may be reduced, thereby preventing cold air from leaking out through the gap. In addition, by bringing the side surfaces 95 and 96 of the partition 90 into close contact with the side walls 11aa and 11ab of the inner case 11, the gap may be prevented from being visible when the storage compartment 20 is viewed from the front of the refrigerator 1, thereby improving the aesthetics.

Although the above technical ideas of the disclosure have been described by way of specific embodiments, the scope of the disclosure is not limited to these embodiments. Various modifications and variations that may be made by those skilled in the art without departing from the technical ideas of the disclosure as set forth in the claims of the patent will be deemed to be within the scope of the disclosure.

## Claims

1. A refrigerator comprising:
an inner case forming a storage compartment therein;
an outer case coupled to an outer side of the inner case to form an exterior;
a partition arranged on an inner side of the inner case and dividing the storage compartment; and
a fixer configured to penetrate the inner case and couplable with the partition to allow the partition to be attached to the inner case.

2. The refrigerator of claim 1, wherein the fixer comprises:
a fixer coupling portion arranged on the inner side of the inner case to coupled with the partition, and
a fixer outer holding portion connected to the fixer coupling portion and arranged on the outer side of the inner case.

3. The refrigerator of claim 2, wherein the fixer outer holding portion is configured to contact an outer wall of the inner case facing the outer side of the inner case.

4. The refrigerator of claim 3, wherein the fixer outer holding portion comprises a plate, and one surface of the plate is configured to contact the outer wall of the inner case.

5. The refrigerator of claim 4, wherein the one surface of the plate comprises a curved surface.

6. The refrigerator of claim 2, wherein the fixer further comprises a fixer inner holding portion arranged on the inner side of the inner case so as to contact an inner wall of the inner case facing the inner side of the inner case.

7. The refrigerator of claim 6, wherein the fixer inner holding portion extends from the fixer coupling portion.

8. The refrigerator of claim 6, wherein the fixer inner holding portion comprises a hook, and one end of the hook is configured to contact the inner wall of the inner case.

9. The refrigerator of claim 8, wherein
the inner case comprises a through-hole through which the fixer can penetrate, and
the one end of the hook comprises a bent member corresponding to a bent wall extending from the inner wall of the inner case to the through-hole.

10. The refrigerator of claim 2, wherein
the partition comprises a coupling protrusion, and
the fixer coupling portion comprises a fixer coupling groove into which the coupling protrusion is inserted.

11. The refrigerator of claim 10, wherein the partition further comprises a coupling hook protruding toward the inner case, and the coupling protrusion is formed to protrude from the coupling hook.

12. The refrigerator of claim 11, wherein the coupling protrusion is formed to protrude in a direction orthogonal to a direction in which the coupling hook protrudes.

13. The refrigerator of claim 10, wherein
the partition comprises a side surface in contact with the inner case, the side surface including a first side surface and a second side surface positioned opposite the first side surface, and
the coupling protrusion comprises a first coupling protrusion arranged on the first side surface and a second coupling protrusion arranged on the second side surface.

14. The refrigerator of claim 13, wherein
the inner case comprises a first side wall facing the first side surface of the partition and a second side wall facing the second side surface of the partition, and
the fixer comprises a first fixer configured to penetrate the first side wall and a second fixer configured to penetrate the second side wall.

15. The refrigerator of claim 2, wherein the fixer coupling portion and the fixer outer holding portion are integrally formed.
